# EUROPÄISCHE PATENTSCHRIFT

(11) **EP 0 429 900 B1**
(45) Veröffentlichungstag und Bekanntmachung des Hinweises auf die Patenterteilung: **11.08.1993**
(21) Anmeldenummer: 90121253.0
(22) Anmeldetag: 07.11.1990
(51) Int. Cl.: B23K 31/02, F01L 3/12, B23P 15/00, B23K 26/00, B23K 15/00, B23K 5/18, B23K 9/04, B23K 10/02

(54) **Verfahren zum Herstellen von hohlen Gaswechselventilen für Hubkolbenmaschinen**
Method for manufacturing hollow valves of piston motors
Méthode de fabrication de soupapes creuses pour moteurs à pistons

(30) Priorität: 29.11.1989 DE 3939348; 28.07.1990 DE 4024084
(43) Veröffentlichungstag der Anmeldung: 05.06.1991
(73) Patentinhaber: MERCEDES-BENZ AG, 70327 Stuttgart (DE)
(72) Erfinder: Burgmer, Heinrich, Dipl.-Ing., W-6382 Friedrichsdorf (DE)

(56) Entgegenhaltungen:
- FR-A- 2 236 612
- GB-A- 2 144 060
- US-A- 2 440 461
- US-A- 4 406 046

## Beschreibung

Die Erfindung betrifft ein Verfahren zum Herstellen von hohlen Gaswechselventilen für Hubkolbenmaschinen nach dem Oberbegriff von Anspruch 1, wie es beispielsweise aus der DE-A1-23 61 712 als bekannt hervorgeht. Ein völlig gleichartiges Hohlventil zeigt die Motortechnische Zeitschrift, Jahrgang 22, Heft 9/1961 in einem Beitrag von H. Stein "Natriumgekühlte Hohlventile und deren Herstellung" in Bild 3 dieses Beitrages. Beide Veröffentlichungen zeigen einen schaftseitigen und auch einen tellerseitigen Stopfenverschluß der Schafthöhlung.

Bei der erwähnten DE-A1-23 61 712 wird das tellerseitige Anbringen des Bohrungsverschlusses bereits als vorbekannte Maßnahme erwähnt und auch zeichnerisch skizziert sowie kritisch gewürdigt. Die eigentliche in der obigen Druckschrift gegebene Empfehlung für das Verschließen des Hohlraumes von gekühlten Gaswechselventilen läuft in eine völlig andere Richtung. Bei dem erwähnten tellerseitigen Verschließen des Hohlraumes wird eine paßgenaue Ronde in einer der Wandstärke des Verschlußstopfens entsprechenden Stärke in die Bohrung oberflächenbündig eingesetzt und mittels einer Feinschweißung darin eingeschweißt. Im Zusammenhang mit der hier vorliegenden Erfindung ist an der bekannten Verfahrensweise nach der DE-A1-23 61 712 oder nach dem o. g. Beitrag von H. Stein, Bild 3, zu kritisieren, daß die Verschlußstopfen, die in der Regel aus einem hochwertigen legierten Werkstoff bestehen, nur unter hohen Werkstoffverlusten in Form von Zerspanungs- oder Stanzverlusten hergestellt werden können. Außerdem sind die Verfahren zur Herstellung dieser Verschlußstopfen selber ebenfalls nicht ganz billig, insbesondere deshalb, weil der hochwertige und zähe Werkstoff zur Bearbeitung hohe Werkzeugkosten verursacht. Eine präzise lokalisierbare Schweißung zum Dichtschweißen des Verschlußstopfens erfordert im übrigen eine sehr exakte Positioniereinrichtung, so daß dazu nur eine sehr teure Schweißvorrichtung verwendet werden kann, die das Verfahren ebenfalls kostenmäßig belastet. Es kommt hinzu, daß die in diesem Zusammenhang bevorzugten Schweißverfahren wie Laser- oder Elektronenstrahlschweißung eine relativ aufwendige und teure Prüftechnik zur Verfahrens- und Qualitätssicherung erforderlich machen. Auch diese aufwendige Prüfung belastet das bekannte Verfahren kostenmäßig.

Neben dem Einschweißen eines paßgenau in die Bohrung eingesetzten Verschlußstopfens durch eine Feinschweißung ist es auch noch bekannt, gekühlte Gaswechselventile von der Tellerseite her zu verschließen, indem ein Verschlußstopfen aus hochwertigem Material durch eine Widerstands-Preßstumpfschweißung in einer Vorzentrierung des offenen Bohrungsendes eingelegt und eingeschweißt wird. Im Prinzip bestehen auch gegenüber diesem Verfahren die gleichen Kritikpunkte wie hoher Materialverbrauch aufgrund von Zerspanungs- bzw. Stanzverlusten, gesondertes Herstellen eines Verschlußstopfens und relativ hoher Kostenaufwand für die Verfahrens- und Qualitätssicherung. Auch in diesem Verfahren wirken sich diese Punkte kostensteigernd aus.

Aus dem eingangs zitierten Beitrag von H. Stein geht es auch als bekannt hervor, Bohrungen von hohlen Ventilschäften durch einen eingepaßten Stift mit Kopf und durch eine anschließende Auftragsschweißung von Hartmetall zu verschließen, wie es dort am Beispiel eines Hohltellerventiles gezeigt ist. Hierbei ist hervorzuheben, daß die solcherart verschlossene Öffnung wesentlich kleiner ist als die Schaftbohrung; ein Größenvergleich zwischen Stiftdurchmesser der zu verschließenden Öffnung einerseits und der Schaftbohrung andererseits ergibt ein Durchmesserverhältnis von 1 : 5. Dies bedeutet entweder einen gesonderte Arbeitsgang des teilweisen Zuschmiedens des Schaftendes, ähnlich wie bei einem anderen in dem genannten Beitrag dargestellten Beispiel, und/oder ein gesondertes Aufbohren des Schaftendes, sofern es sich um ein Hohltellerventil wie dem dort in diesem Zusammenhang gezeigten Ausführungsbeispiel handelt. Hervorzuheben ist, daß die Verschließmethode mit einem eingepreßten Stift und einer Auftragsschweißung mit Hartmetall nur für sehr kleine Bohrungen für machbar gehalten wird, weil die Durchmesserreduzierung der Verschlußöffnung im Ausmaß 1 : 5 nicht nur augenfällig ist, sondern der kleinere Durchmesser der Einfüllöffnung muß durch gesonderte Verfahrensschritte herbeigeführt werden, was aufwendig ist. Da der Stift bei dem Hohlventil überdies einen kegelstumpfförmigen Kopf aufweist, bildet er selber Bestandteil des Verschlußstopfens, weil er aufgrund des kegelstumpfförmigen Kopfes die relativ dünne, linsenförmige Auftragsschweißung mechanisch abstützen muß, damit diese unter der mechanischen Belastung bei der Ventilbetätigung nicht einreißt. Die Auftragsschweißung stellt also keineswegs alleine den Verschlußstopfen, sondern nur gemeinsam mit dem eingesetzten und axial formschlüssig in der Bohrung gehaltenen Stift dar. Bei dem anderen, bereits kurz erwähnten Ausführungsbeispiel eines Hohlventiles wird das Schaftende, dessen Außendurchmesser im Endbereich zunächst größer gehalten war, zum Verschließen zugeschmiedet und die verbleibende Kapillare durch eine Auftragsschweißung mit Hartmetall zugeschweißt.

Aufgabe der Erfindung ist es, ausgehend von dem gattungsgemäß zugrundegelegten Verfahren dieses dahingehend weiterzubilden, daß die Gaswechselventile bei gleicher Zuverlässigkeit kostengünstiger hergestellt werden können.

Diese Aufgabe wird erfindungsgemäß durch die kennzeichnenden Merkmale von Anspruch 1 gelöst. Dank der vollständigen Einbringung des Werkstoffes des Verschlußstopfens, der im Durchmesser mindestens der Ventilschaftbohrung entspricht, durch eine Auftragsschweißung, entfällt der gesonderte Verfahrensgang des Herstellens der Verschlußstopfen, so daß nicht nur die Kosten für diesen Arbeitsgang erspart werden, sondern daß auch Zerspanungs- oder Stanzabfälle für einen sehr teuren Werkstoff vermieden werden. Im übrigen sind die Auftragsschweißungen mittels herkömmlicher, gut beherrschbarer Schweißverfahren und unter Verwendung relativ preisgünstiger Maschinen durchführbar. Erste Versuche berechtigen zu der Erwartung, daß eine Zuverlässigkeitskontrolle bezüglich Dichtheit entfallen kann. Etwaige Fehlschweißungen, die dennoch auftreten könnten, sind außenseitig durch eine einfach durchführbare Sichtkontrolle erkennbar. Es wird erwartet, daß äußerlich einwandfrei erscheinende Schweißungen auch insgesamt zuverlässig dicht sind. Die zwar auch nur unter Werkstoffverlusten herstellbare dünnwandige Ronde zum Halten der Schweißschmelze kann aus einem preisgünstigen und leicht bearbeitbaren Werkstoff hergestellt werden, bei dem die Werkstoffabfälle kostenmäßig nicht ins Gewicht fallen. Aufgrund der dünnen Wandstärke und der geringen Festigkeit dieses Werkstoffes kann von den eingesetzten Werkzeugen eine hohe Standzeit erwartet werden, so daß in dieser Hinsicht kaum hohe Kosten anfallen.

Weitere zweckmäßige Ausgestaltungen der Erfindung können den Unteransprüchen entnommen werden. Im übrigen ist die Erfindung anhand verschiedener in den Zeichnungen dargestellter Ausführungsbeispiele nachfolgend noch erläutert; dabei zeigen:
- Figur 1: ein Ausführungsbeispiel eines Gaswechselventiles in Einzeldarstellung und in einer üblichen Gebrauchslage,
- Figur 2 bis 5: vier verschiedene Phasen bei der Herstellung des Gaswechselventiles nach Figur 1,
- Figur 6: eine stark vergrößerte, ausschnittsweise Einzeldarstellung des tellerseitigen Verschlusses des Gaswechselventiles nach Figur 1,
- Figur 7 bis 9: drei verschiedene Abwandlungsformen des tellerseitigen Hohlraumverschlusses eines kühlbaren Gaswechselventiles,
- Figur 10: ein Ausführungsbeispiel für das schaftseitige Verschließen des Hohlraumes,
- Figur 11: eine ähnliche Darstellung wie Figur 5 jedoch in Vergrößerter Darstellung eine Laserschweißung veranschaulichend,
- Figur 12 und 13: ähnliche Darstellungen wie in Figur 11, jedoch mit Durchführung der Auftragsschweißung durch eine Elektronenstrahlschweißung in zwei verschiedenen Arten und
- Figur 14: eine ähnliche Darstellung jedoch mit Ausführung der Auftragsschweißung mit einer Autogenschweißung.

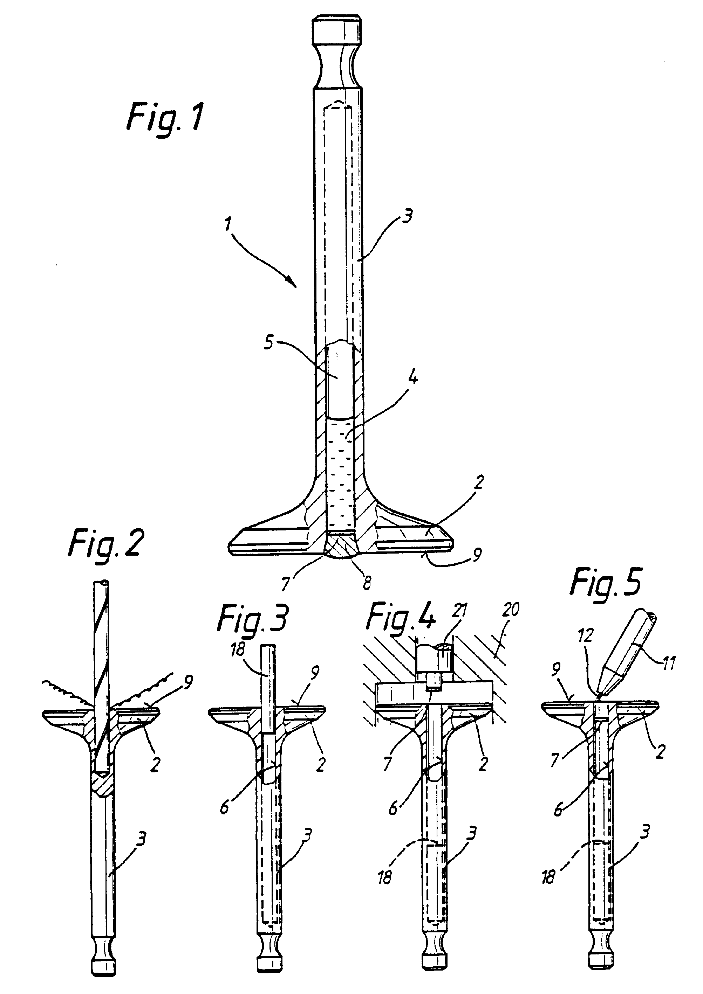

Das in Figur 1 dargestellte kühlbare Gaswechselventil für Hubkolbenmaschinen weist einen Ventilteller 2 sowie einen Ventilschaft 3 auf, welch letzterer eine Höhlung 6 aufweist, die teilweise mit einem Kühlmedium 4, vorzugsweise Natrium gefüllt ist. Die als Bohrung 6 ausgebildete Höhlung ist tellerseitig durch einen Verschlußstopfen 8 verschlossen, über dessen Anbringung nachfolgend Näheres ausgeführt ist.

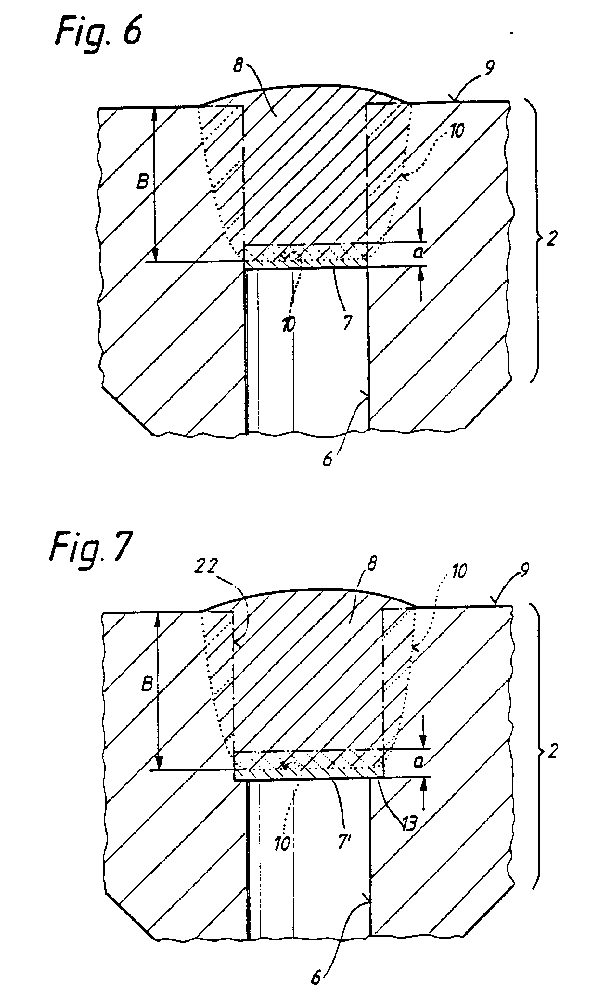

In der Darstellungsfolge der Figuren 2 bis 5 sind verschiedene wesentliche Phasen bei der Herstellung des Gaswechselventils nach Figur 1 gezeigt. Und zwar wird zunächst die Höhlung innerhalb des Ventilschaftes durch axiales Bohren von der Tellerseite her freigearbeitet (Figur 2). In die fertiggestellte und gereinigte Bohrung 6 wird ein in seiner Menge definiert bemessener Kühlmittelpreßling 18 beispielsweise aus Natrium eingesetzt, wobei darauf geachtet werden sollte, daß das Natrium möglichst wenig und/oder nur kurzzeitig mit Luft bzw. dem darin enthaltenen Sauerstoff in Berührung gelangt. In einem weiteren Verfahrensschritt (Figur 4) wird unter Zuhilfenahme einer nur als Beispiel angedeuteten Zentriervorrichtung 20 und eines Preßstempels 21 ein kleines Füllstück 7 in die Bohrungsöffnung auf definierte Tiefe eingepreßt, wobei die Einpreßtiefe annähernd der Stärke B des späteren Verschlußstopfens entspricht. Dieser Verschlußstopfen 8 wird in einem weiteren in Figur 5 angedeuteten Verfahrensschritt durch eine Auftragsschweißung angebracht, wobei der die Masse des Verschlußstopfen ausmachende legierte Werkstoff in einer thermisch hoch belastbaren Qualität während des Schweißens durch eine sich verzehrende Elektrode oder in Form eines eingeblasenen Pulvers zugegeben wird. Der damit rasch, einfach und materialsparend herstellbare Verschlußstopfen 8 ist stark vergrößert in der Figur 6 dargestellt. Es ist dort erkennbar, daß das zunächst auf definierte Tiefe in die Bohrung 6 eingepreßte Füllstück 7 eine sehr geringe Wandstärke (Maß a) aufweist. Dieses Füllstück aus einem preiswerten Stahlblech hat lediglich die Funktion, die Schweißschmelze der Auftragsschweißung endseitig in der Bohrung 6 während des Schweißens zu halten. Wie an der punktiert angedeuteten Kontur 10 des aufgeschmolzenen Bereiches erkennbar wird, wird auch das Füllstück 7 sehr stark angeschmolzen ebenso wie beabsichtigterweise die ehemalige Randzone der Bohrung 6. Während der mit dem Schweißbrenner 11 ausgeführten Auftragsschweißung wird beispielsweise über die Elektrode 12 soviel Werkstoff zugeführt, bis die Oberkante des Schmelzbades etwa bündig mit der freien Tellerseite 9 liegt.

Als Schweißverfahren zur Durchführung einer solchen Auftragsschweißung kommen WIG-, MIG- oder Plasma-Pulver-Schweißverfahren in Betracht, die hier als bekannt unterstellt werden.

Erfahrungsgemäß sind diese Schweißverfahren mit sehr hoher Zuverlässigkeit einsetzbar, so daß bei äußerlich ordentlicher Schweißung auch eine zuverlässige Qualität, z. B. Dichtheit der Schweißung angenommen werden kann. Der bei MIG- oder bei WIG-Schweißverfahren in Drahtform zugegebene Auftragswerkstoff ist kaum wesentlich teurer als der gleiche in Platten- oder Stabform angelieferte Werkstoff. Durch den Wegfall von Zerspanungs- bzw. Stanzabfällen in der Größenordnung von 30 bis 40 % können jedoch erhebliche Kosteneinsparungen durch das Anbringen der Verschlußstopfen 8 im Auftragsschweißverfahren erzielt werden; der zu verwendende Werkstoff ist nämlich sehr teuer. Außerdem entfallen das gesonderte Herstellen der Verschlußstopfen und eine aufwendige Qualitätskontrolle. Beim ebenfalls sehr zuverlässig arbeitenden Plasma-Pulver-Schweißverfahren wird der Auftragswerkstoff in Pulverform aufgetragen, der mit einem Schutzgas in die Plasmazone eingeblasen und auf die Behandlungsstelle aufgetragen wird.

Es wurde bereits erwähnt, daß die Füllstücke 7 aus einem Blech, vorzugsweise aus einem niedrig legierten Stahl ausgestanzt sein können, was aufgrund der geringen Werkstoffestigkeiten dieses Werkstoffes mit hohen Werkzeugstandzeiten auf rationelle Weise durchgeführt werden kann. Dabei ist das Füllstück 7 vorzugsweise als ebene Platine ausgebildet, wie die meisten dargestellten Ausführungsbeispiele zeigen. Anstelle von Stahl sind auch andere Werkstoffe, insbesondere Kupfer denkbar, was den Wärmeübergang vom Kühlmedium in den anlegierten, im Auftragsschweißverfahren angebrachten Verschlußstopfen begünstigt. Außerdem hält das die Schweißwärme besser in den Ventilteller ableitende Kupfer besser einem Durchbrennen bzw. Durchbschmelzen stand als eine Stahlplatine. Selbstverständlich sind auch noch andere Werkstoffe wie Messing oder Aluminium denkbar, selbst die Verwendung von Kunststoff u.U. mit geeigneten Zusätzen sollte nicht völlig außer Betracht gelassen werden.

Bei dem in den Figuren 1 bis 6 gezeigten Ausführungsbeispiel ist das Füllstück 7 kraftschlüssig im Bereich der Bohrungsöffnung durch einen Preßsitz gehalten. Ein mehr oder weniger starkes Übermaß des Durchmessers des Füllstückes 7 gegenüber dem Durchmesser der Bohrung 6 ist hierbei weniger tragisch, so daß grobe Toleranzen ohne weiteres zugelassen werden können. Die Preßkraft und die Stabilität des Ventiltellers 2 werden in jedem Fall ausreichen, um das Füllstück 7 auch bei starkem Übermaß lagedefiniert einbringen zu können, ohne daß der Ventilteller darunter sich erkennbar deformieren würde. Durch entsprechende Schultern an dem Einpreßstempel, an dem das Füllstück 7 beispielsweise magnetisch oder durch Saugluft gehalten sein kann, kann die Einpreßtiefe exakt vorherbestimmt werden.

Um das Füllstück 7' formschlüssig und lagedefiniert in einer bestimmten Tiefe der Bohrung 6 bzw. in einem bestimmten Abstand zur freien Tellerseite 9 halten zu können, ist gemäß dem Ausführungsbeispiel nach Figur 7 vorgesehen, daß tellerseitig an die Bohrung 6 eine zylindrische Ansenkung 22 angebracht ist, durch die eine Schulter 13 geschaffen wird, auf der das Füllstück 7' lagedefiniert und formschlüssig aufliegen kann. Es kann sich dabei sowohl um einen Preßsitz als auch um eine Spielpassung des Füllstückes 7' innerhalb der Ansenkung 22 handeln. Im übrigen entspricht das Ausführungsbeispiel nach Figur 7 weitgehend dem nach Figur 6.

Bei dem Ausführungsbeispiel nach Figur 8 ist das tellerseitige Ende der Bohrung 6 auf einen größeren Durchmesser aufgebohrt (Aufbohrung 23) und dabei ein konischer Übergang (Bohrungsabsatz 14) zu der Ventilschaftbohrung 6 geschaffen. In die Aufbohrung 23 ist das Füllstück 7'' lose eingelegt oder eingepreßt; in jedem Fall liegt es formschlüssig an der der freien Tellerseite 9 zunächstliegenden Kante des Bohrungsabsatzes 14 an. Der wesentliche Grund für diese Ausgestaltung ist die Schaffung einer größeren vom Kühlmittel benetzten Kühlfläche, wodurch eine bessere Kühlwirkung erzielbar ist. Außerdem ist durch das Aufbohren eine Gewichtsreduzierung erzielbar. Selbstverständlich erfordert diese aufgebohrte Version auch ein größeres Füllstück 7'' und einen im Durchmesser größeren Verschlußstopfen 8'. Wegen des größeren Wärmeeintrages bei der Auftragsschweißung müßte das Füllstück 7' in der Wandstärke ausreichend stark bemessen werden, damit es unter der Wirkung dieses Wärmeeintrages nicht durchschmilzt.

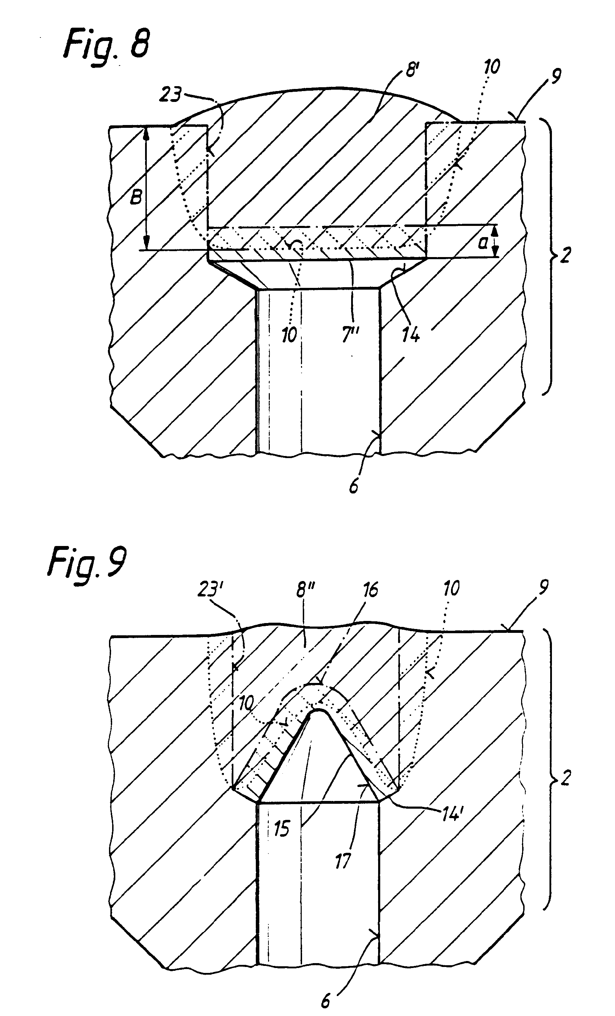

Bei dem Ausführungsbeispiel nach Figur 9 ist das Füllstück in Form eines kegelstumpfförmigen Hütchens 15 ausgebildet. Hierbei ist zur sicheren Halterung des Hütchens 15 im Bereich des tellerseitigen Endes der Ventilschaftbohrung 6 ebenfalls eine Aufbohrung 23' angebracht, durch die ebenfalls ein konischer Bohrungsabsatz 14' im Übergangsbereich zur Bohrung 6 entsteht. Das Hütchen 15 wird mit seiner geschlossenen Seite 15 nach außen weisend in die Aufbohrung 23' eingesetzt, so daß die hohlkegelige offene Seite 17 des Hütchens dem Innern der Ventilschaftbohrung zugekehrt ist. Zwar ist das als Hütchen 15 ausgebildete Füllstück nicht so einfach herstellbar wie eine ebene Platine; außerdem muß beim Einsetzen des Hütchens in die Aufbohrung 23' darauf geachtet werden, daß es in der richtigen Richtung eingesetzt wird. Jedoch hat die Ausgestaltung nach Figur 9 den Vorteil, daß weniger Werkstoff für den Verschlußstopfen 8'' benötigt wird, was von den Werkstoffmengen her eine Kostenreduzierung bringt. Außerdem hat der reduzierte Werkstoffeinsatz auch Gewichtsvorteile, die sich im Motorbetrieb günstig auswirken. Darüber hinaus ist die wirksame Kühlfläche im Bereich zur freien Tellerseite hin größer als bei einer ebenen Füllstück-Gestaltung; schließlich sind die für die Wärmeleitung maßgebenden Wandstärken zumindest im Bereich der Bohrungsmitte in zulässiger Weise geringer als bei den anderen Ausführungsbeispielen, was ebenfalls den Wärmeübergang begünstigt.

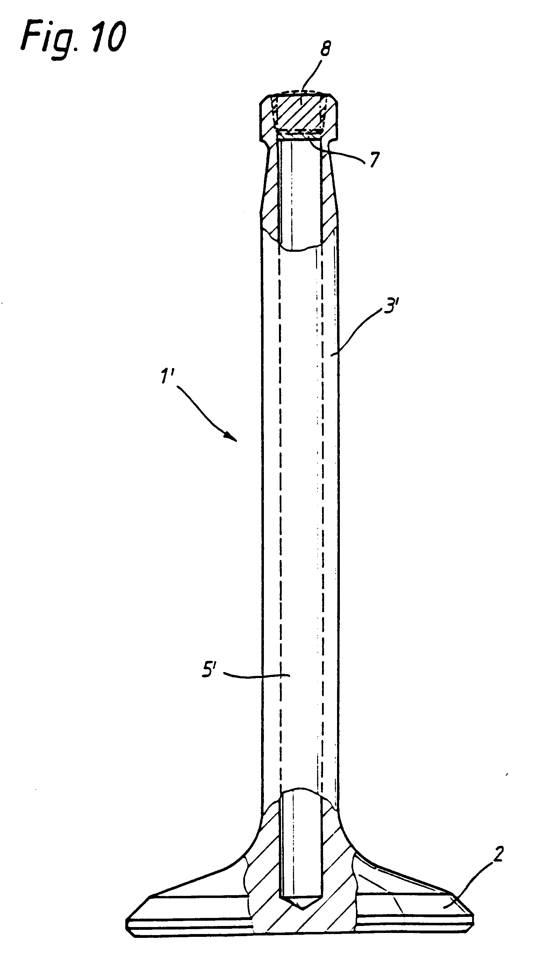

Grundsätzlich ist das erfindungsgemäße Verschließen der Höhlung 5' in dem Schaft 3' des Gaswechselventiles 1' auch am freien Ventilschaftende möglich wie dies Figur 10 zeigt. Das dort dargestellte hohle Gaswechselventil 1' ist nicht zu Kühlzwecken sondern lediglich aus Gewichtsgründen hohlgebohrt. Im übrigen ist das offene Ende der Bohrung ebenfalls durch ein das Schmelzbad endseitig festhaltendes Füllstück 7 und durch einen mittels einer Auftragsschweißung angebrachten Verschlußstopfen 8 verschlossen. Allerdings muß sich noch eine spanabhebende Endbearbeitung am Umfang und an der Stirnseite anschließen.

Bei den bisher erwähnten Schweißverfahren kann ein sog. Kanteneffekt beobachtet werden, insbesondere dann, wenn kleinere Bohrungen zugeschweißt werden sollen. Dieser Kanteneffekt äußert sich dadurch, daß der Strom auf dem Weg des geringsten elektrischen Widerstandes fließen möchte und sich aufgrund dessen im Kantenbereich konzentriert. Dadurch wird der Zusatzwerkstoff bevorzugt auf der im Stromfluß befindlichen, hervorstehenden Werkstückkante aufgebaut. Eine Auftragsschweißung vom Boden der mit dem Verschlußstopfen zugedeckten Öffnung her wird durch einen solchen Kanteneffekt erschwert. Um solche Kanteneffekte zu vermeiden, werden für die Auftragsschweißung solche Verfahren empfohlen, bei denen das Werkstück außerhalb von und elektrisch passiv gegenüber dem den Zugabewerkstoff und den Ventilwerkstoff erschmelzenden Schweißenergiefluß angeordnet ist. Das damit gegebene generalisierende Auswahlkriterium für geeignete Schweißverfahren erlaubt es, gezielt geeignete Schweißverfahren auszuwählen, beispielsweise Laserschweißung oder Elektronenstrahlschweißung oder auch Autogenschweißen. Diese Schweißverfahren vermeiden vorliegend nachteilige Kanteneffekte.

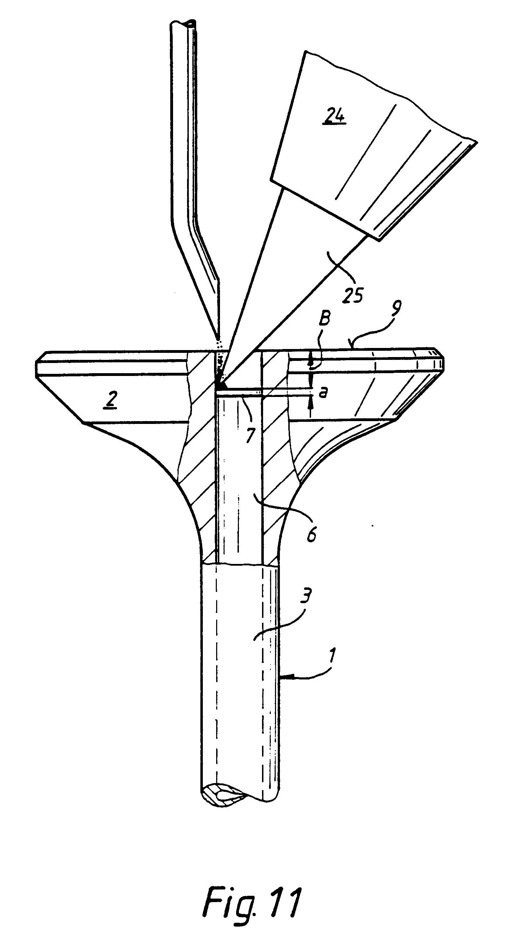

Bei dem in Figur 11 dargestellten Verfahrensbeispiel wird die Schweißung mittels eines aus dem Laserkopf 24 austretenden Laserstrahles 25 ausgeführt, wobei der pulverförmige Zusatzwerkstoff durch ein Zufuhrrohr 26 an die Schweißstelle entsprechend dem Fortschritt der Auftragsschweißung zudosiert wird. Um alle Umfangspartien des Verschlußstopfens durch den als ortsfest angenommenen Laserkopf 24 erreichen zu können, wird während des Fortschreitens der Auftragsschweißung das Ventil 1 langsam gedreht und/oder gegenüber der dargestellten Ventillage radial verschoben. Auf diese Weise kann von unten her, d. h. von dem eingepreßten Füllstück 7 her der Verschlußstopfen nach und nach aufgebaut bzw. aufgetragen werden. Störende Kanteneffekte beeinträchtigen dabei ein geordnetes Einbringen der Schweißschmelze von unten her nicht.

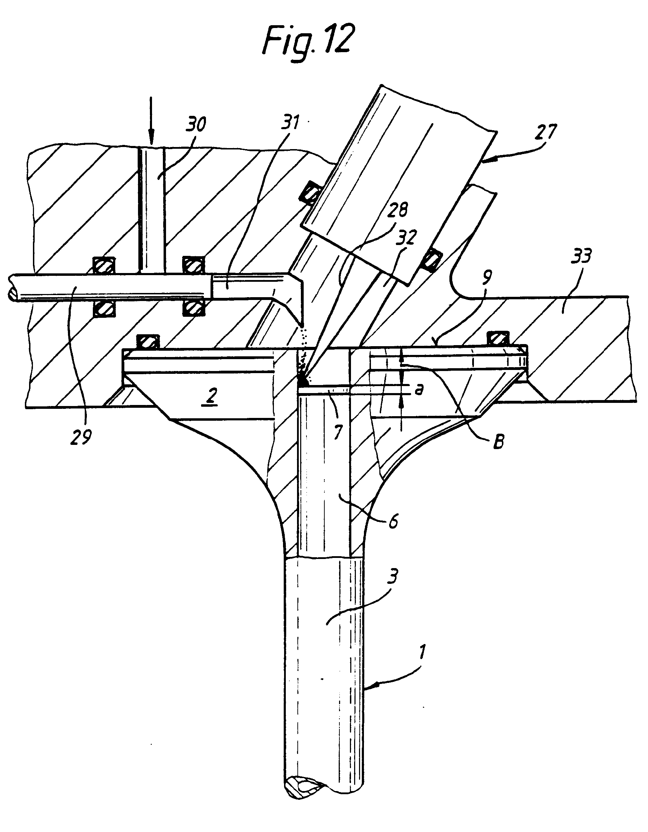

Figur 12 zeigt als denkbares Ausführungsbeispiel eine ganz ähnliche Anordnung, jedoch ist hier als Energiequelle für das Auftragsschweißen eine Strahlkanone 27 zur Erzeugung eines Elektronenstrahles 28 vorgesehen, der ebenfalls in den Bereich des späteren Verschlußstopfens fokussiert ist. Nachdem jedoch beim Elektronenstrahlschweißen Vakuum vorliegen muß, ist das Gaswechselventil mit der freien Tellerseite 9 dichtend in ein Gehäuse 33 eingesetzt, so daß damit eine Vakuumkammer 32 zur Stirnseite der Strahlkanone 27 gebildet ist. Diese Vakuumkammer wird nach dem Einsetzen des Gaswechselventiles evakuiert, woraufhin die Auftragsschweißung beginnen kann. Auch bei dem in Figur 12 dargestellten Verfahrensbeispiel ist die Zufuhr des Zusatzwerkstoffes in Pulverform vorgesehen. Hierbei muß jedoch darauf geachtet werden, daß bei der Pulverzufuhr das Vakuum nicht beeinträchtigt wird. Bei dem in Figur 12 gezeigten Beispiel wird zu diesem Zweck mittels eines Dosierkolbens 29 das in einer horizontal verlaufenden zylindrischen Dosierkammer bereitgehaltene Metallpulver langsam in Richtung zur Vakuumkammer ausgeschoben, wo es über eine Rutsche durch Schwerkrafteinfluß in die Stelle des Strahlfokus einrieselt und dort aufgeschmolzen wird. Auch bei dieser Verfahrensvariante muß das Ventil in Umgangsrichtung und/oder radial verschoben werden, um alle Bereiche des Verschlußstopfens durch den Fokus erreichen zu können, was jedoch in Figur 12 zeichnerisch nicht angedeutet ist. Gewisse Strahlverlagerungen können auch von Seiten der Strahlkanone 27 her durch entsprechende Strahlauslenkungen vorgenommen werden. Beim Werkstückwechsel kann durch Zurückziehen des Dosierkolbens 29 die Dosierkammer 31 erneut aus dem Zulaufrohr 30 gefüllt werden. Auch mittels der Elektronenstrahlschweißung ist ein geordnetes Auffüllen des Stopfenvolumens mit hochwertigem Werkstoff ohne störende Kanteneffekte möglich.

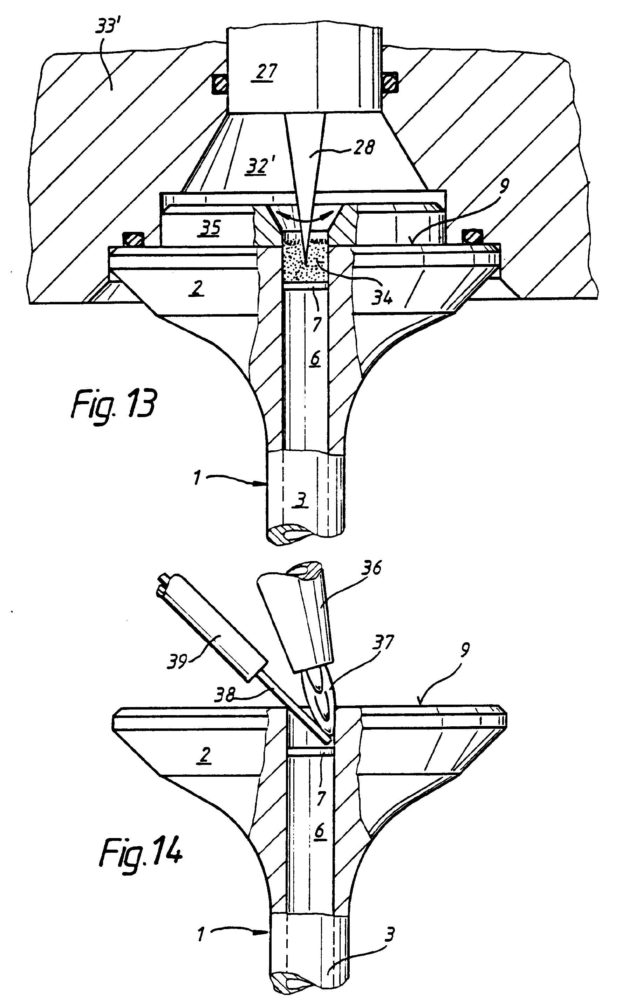

Bei der in Figur 13 dargestellten Verfahrensvariante des Elektronenstrahlschweißens ist eine genau abgestimmte Pulvermenge 34 zuvor in die den späteren Verschlußstopfen bildende, nach unten durch das Füllstück 7 abgeschlossene Öffnung eingefüllt; nachdem die Pulvermenge 34 aufgrund der geringeren Schüttdichte gegenüber der Dichte des Vollquerschnittes mehr Raum einnimmt, als der erschmolzene Verschlußstopfen, ist der Überstand des Pulvers durch einen auf die freie Tellerseite 9 lagedefiniert aufgelegten Keramikring 35 gesichert. Durch den über längere Zeit pendelnd und/oder kreisend über der Pulvermenge bewegten Elektronenstrahl 28 wird das Pulver von oben her aufgeschmolzen, wobei die Erschmelzungsfront mit der Zeit durch die ganze Pulverschüttung hindurchschreitet und das Füllstück 7 und die Seitenwandung der Bohrung 6 erreicht und auch diese anschmilzt. Mit zunehmender Erschmelzung sackt das Pulver zusammen und mit ihm sinkt auch die Oberfläche des Schmelzbades ab, so daß der Elektronenstrahl u.U. entsprechend nachfokussiert werden muß.

Bei dem in Figur 14 gezeigten Ausführungsbeispiel wird die Auftragsschweißung mit einem eine kleine Schweißflamme 37 erzeugenden Autogenschweißbrenner 36 durchgeführt, wobei der Auftragswerkstoff in Form eines Schweißdrahtes 38 über ein Führungsrohr 39 zugeführt wird. Der Schweißdraht von thermisch hoch belastbarer Werkstoffqualität kann auf einer großen Spule bervorratet sein.

## Patentansprüche

1. Verfahren zum Herstellen von hohlen Gaswechselventilen (1) für Hubkolbenmaschinen, welche Gaswechselventile (1) einen vom Ventilteller (2) abragenden, hohlen, nach außen hermetisch verschlossenen Ventilschaft (3) aufweisen, in welchen Verfahren
- an dem Ventilschaft (3) eine axial einseitig offene Bohrung (6) angebracht,
- in die zu verschließende, mindestens dem Bohrungsdurchmesser entsprechende, stirnseitige Bohrungsöffnung (6, 22, 23, 23') ein Füllstück (7, 7', 7'', Hütchen 15) eingesetzt und
- die Bohrungsöffnung (6, 22, 23, 23') durch Schweißen hermetisch verschlossen wird,
**gekennzeichnet durch** die Gemeinsamkeit folgender Merkmale:
- das aus einem Blech ausgestanzte und aus einem preisgünstigeren und leichter als der sonstige Ventilwerkstoff bearbeitbaren Werkstoff bestehende, in der Wandstärke (a) wesentlich geringer als der Verschlußstopfen (Maß B) ausgebildete Füllstück (7, 7', 7'', Hütchen 15) wird oberseitig etwa um die Wandstärke (Maß B) des Verschlußstopfens (8, 8', 8'') gegenüber dem Rand des offenen Bohrungsendes (freie Tellerseite 9) zurückversetzt in die Bohrung (6, 22, 23, 23') eingebracht,
- der die Bohrungsöffnung (6, 22, 23, 23') verschließende Verschlußstopfen (8, 8', 8'') wird durch Auftragsschweißen (Figur 5) unter Zugabe des die Masse des Verschlußstopfens (8, 8', 8'') ausmachenden, legierten, thermisch hoch belastbaren Werkstoffes in Draht- oder Pulverform erzeugt,
- wobei mit dem zurückversetzten Füllstück (7, 7', 7'', Hütchen 15) während der Auftragsschweißung lediglich die Schweißschmelze endseitig in der Bohrung (6, 22, 23, 23') gehalten wird.

2. Verfahren nach Anspruch 1,
**dadurch gekennzeichnet,**
daß die Auftragsschweißung mit einem solchen Schweißverfahren ausgeführt wird, bei dem das Werkstück (1) außerhalb von und elektrisch passiv gegenüber dem den Zugabewerkstoff und den Ventilwerkstoff erschmelzenden Schweißenergiefluß angeordnet ist.

3. Verfahren nach Anspruch 2,
**dadurch gekennzeichnet**,
daß die Auftragsschweißung mittels einer Laserschweißung durchgeführt wird (Figur 11).

4. Verfahren nach Anspruch 2,
**dadurch gekennzeichnet**,
daß die Auftragsschweißung mittels einer Elektronenstrahlschweißung durchgeführt wird (Figur 12 oder 13).

5. Verfahren nach Anspruch 2,
**dadurch gekennzeichnet**,
daß die Auftragsschweißung mittels einer Autogenschweißung durchgeführt wird (Figur 14).

6. Verfahren nach Anspruch 1,
**dadurch gekennzeichnet**,
daß die Auftragsschweißung (Figur 5) mittels einer WIG-Schweißung durchgeführt wird.

7. Verfahren nach Anspruch 1,
**dadurch gekennzeichnet**,
daß die Auftragsschweißung (Figur 5) mittels einer MIG-Schweißung durchgeführt wird.

8. Verfahren nach Anspruch 1,
**dadurch gekennzeichnet**,
daß die Auftragsschweißung (Figur 5) mittels einer Plasma-Pulver-Schweißung durchgeführt wird.

9. Verfahren nach einem der Anspruch 1 bis 8,
**dadurch gekennzeichnet**,
daß die Bohrung (6) im Ventilschaft (3) von der Tellerseite her gebohrt und verschlossen wird.

10. Verfahren nach einem der Ansprüche 1 bis 9,
**dadurch gekennzeichnet**,
daß vor dem Einbringen des Füllstückes (7, 7', 7'', Hütchen 15) in die Bohrung (6) ein Kühlmedium (18) eingeführt wird (Figur 3).

11. Verfahren nach einem der Ansprüche 1 bis 10,
**dadurch gekennzeichnet**,
daß das Füllstück (7, 7', 7'', Hütchen 15) aus unlegiertem Stahl hergestellt wird.

12. Verfahren nach einem der Ansprüche 1 bis 10,
**dadurch gekennzeichnet**,
daß das Füllstück (7, 7', 7'') als ebene Platine ausgebildet ist.

13. Verfahren nach einem der Ansprüche 1 bis 10,
**dadurch gekennzeichnet**,
daß das Füllstück als kegelstumpfförmiges Hütchen (15) ausgebildet ist und mit der geschlossenen Seite (16) nach außen weisend in die Bohrung (6, 23') eingesetzt wird.

14. Verfahren nach einem der Ansprüche 1 bis 13,
**dadurch gekennzeichnet**,
daß das Füllstück (7) in die Bohrung (6) auf definierte Tiefe eingepreßt wird und darin unter Preßsitz haftet.

15. Verfahren nach einem der Ansprüche 1 bis 13,
**dadurch gekennzeichnet**,
daß an die Bohrung (6) eine Schulter (13, 14, 14') angebracht wird, auf der das eingebrachte Füllstück (7, 7', 15) formschlüssig gehalten wird und dessen Einbringtiefe definiert.

## Claims

1. Process for the production of hollow gas exchange valves (1) for elevating piston machines, the gas exchange valves (1) having a valve shaft (2) which is hollow and hermetically closed on the exterior and which project from the valve head, in which process
- an axial, side, open, bored hole (6) disposed in the valve shaft (3),
- in the opening of the bored hole (6, 22, 23, 23') on the front face to be closed there is a fillet inserted (7, 7', 7'') which corresponds in size at least to the diameter of the bored hole and
- the opening of the bored hole (6, 22, 23, 23') is hermetically closed by means of welding,
characterized in that
the fillet (7, 7', 7'' cup 15) which in thickness (a) is significantly smaller than the plug (dimension B) is punched out of a single metal sheet and is made of a material which is more favourably priced and lighter than the other workable valve raw materials, on the upper side, is inserted set back in the bored hole (6, 22, 23, 23') to approximately the same distance from the edge of the open end of the bored hole (free head face 9) as the thickness of the wall (dimension B) of the plug (8, 8', 8''),
the plug (8, 8', 8'') closing the opening of the bored hole (6, 22, 23, 23') is produced by means of deposit welding (fig. 5) by the addition of the mass of the plug (8, 8', 8'') as a settling, alloyed, thermically highly resistant material in wire or flux form,
whereby with the fillet (7, 7', 7'', cup 15) which is set back, the welding melt is held only on the end face of the bored hole (6, 22, 23, 23').

2. Process according to claim 1, characterized in that the the deposit welding is carried out employing a welding process by which the workpiece (1) is disposed externally to and electrically passively in relation to the valve material welding energy flux which melts.

3. Process according to claim 2, characterized in that the deposit welding is carried out using laser welding (fig. 11).

4. Process according to claim 2, characterized in that the deposit welding is carried out by means of electron beam welding (fig. 12 or 13).

5. Process according to claim 2, characterized in that the deposit welding is carried out by means of gas welding (fig. 14).

6. Process according to claim 1, characterized in that the deposit welding (fig. 5) is carried out by means of inert gas shielded arc welding using a tungsten electrode.

7. Process according to claim 1, characterized in that the deposit welding (fig. 5) is carried out by means of inert gas metal-arc welding.

8. Process according to claim 1, characterized in that the deposit welding (fig. 5) is carried out by means of plasma-flux welding.

9. Process according to any of claims 1 to 8, characterized in that the bored hole (6) in the valve shaft (3) is bored and closed towards the head face.

10. Process according to any of claims 1 to 9, characterized in that before inserting the fillet (7, 7', 7'', cup 15) info the bored hole (6) a coolant (18) is introduced (fig. 3).

11. Process according to any of claims 1 to 10, characterized in that the fillet (7, 7', 7'', cup 15) is manufactured from unalloyed steel.

12. Process according to any of claims 1 to 10, characterized in that the fillet (7, 7', 7'') is formed as flat platinum.

13. Process according to any of claims 1 to 10, characterized in that the fillet is formed as a truncated-cone shaped cup (15) and is inserted into the bored hole (6, 23') with the closed face (16) showing towards the outside.

14. Process according to any of claims 1 to 13, characterized in that the fillet (7) is driven into the bored hole (6) to a specific depth and adheres therein as a force fit.

15. Process according to any of claims 1 to 13, characterized in that a shoulder (13, 14, 14') is applied to the bored hole, the depth of insertion of the inserted fillet (7, 7', 7'') being defined by said shoulder against which said fillet is held in a form-locking fashion.

## Revendications

1. Procédé pour fabriquer des soupapes d'inversion du flux gazeux (1) creuses pour machines à pistons alternatifs, soupapes d'inversion du flux gazeux (1) qui comportent une tige de soupape (3) creuse, s'étendant à partir de la tête de soupape (2) et hermétiquement fermée vers l'extérieur, procédé selon lequel
- on réalise dans la tige de soupape (3) un perçage (6) axialement ouvert d'un côté,
- on met en place une pièce de remplissage (7, 7', 7'', chaperon 15) dans l'orifice d'extrémité du perçage (6, 22, 23, 23') devant être fermé et correspondant au moins au diamètre du perçage et
- on ferme l'orifice du perçage (6, 22, 23, 23') hermétiquement par soudage,
caractérisé par l'ensemble des caractéristiques suivantes:
- on effectue la mise en place dans le perçage (6, 22, 23, 23') de la pièce de remplissage (7, 7', 7'', chaperon 15), découpée dans une tôle et faite d'un matériau plus économique et usinable plus facilement que le reste du matériau de la soupape, pièce dont l'épaisseur de paroi (a) est nettement inférieure à celle du bouchon de fermeture (cote B), de manière que sa face supérieure soit disposée en retrait, par rapport au bord de l'extrémité ouverte du perçage (côté libre de la tête 9), d'une quantité correspondant à peu près à l'épaisseur de paroi (cote B) du bouchon de fermeture (8, 8', 8''),
- on crée le bouchon de fermeture (8, 8', 8''), obturant l'orifice du perçage (6, 22, 23, 23'), par soudage à superposition (figure 5), avec apport du matériau allié, pouvant être soumis à des contraintes thermiques élevées et représentant la masse du bouchon de fermeture (8, 8', 8''), sous la forme de fil ou de poudre,
- en maintenant seulement, pendant le soudage à superposition, par la pièce de remplissage (7, 7', 7'', chaperon 15) disposée en retrait, le métal fondu par le soudage dans l'extrémité du perçage (6, 22, 23, 23').

2. Procédé selon la revendication 1, caractérisé en ce que l'on effectue le soudage à superposition selon un procédé de soudage avec lequel la pièce travaillée (1) est disposée en dehors et de manière qu'elle soit électriquement passive vis-à-vis du matériau d'apport et du flux d'énergie de soudage produisant la fusion du matériau de la soupape.

3. Procédé selon la revendication 2, caractérisé en ce que l'on effectue le soudage à superposition au moyen d'un soudage à laser (figure 11).

4. Procédé selon la revendication 2, caractérisé en ce que l'on effectue le soudage à superposition au moyen d'un soudage par bombardaient électronique (figure 12 ou 13).

5. Procédé selon la revendication 2, caractérisé en ce que l'on effectue le soudage à superposition au moyen d'un soudage autogène (figure 14).

6. Procédé selon la revendication 1, caractérisé en ce que l'on effectue le soudage à superposition (figure 5) au moyen d'un soudage à l'arc TIG.

7. Procédé selon la revendication 1, caractérisé en ce que l'on effectue le soudage à superposition (figure 5) au moyen d'un soudage selon le procédé MIG.

8. Procédé selon la revendication 1, caractérisé en ce que l'on effectue le soudage à superposition (figure 5) au moyen d'un soudage au plasma sous flux conducteur.

9. Procédé selon une des revendications 1 à 8, caractérisé en ce que l'on réalise et on ferme le perçage (6) dans la tige (3) de la soupape depuis le côté de la tête.

10. Procédé selon une des revendications 1 à 9, caractérisé en ce que, avant la mise en place de la pièce de remplissage (7, 7', 7'', chaperon 15), dans le perçage (6), on y introduit une substance de refroidissement (18) (figure 3).

11. Procédé selon une des revendications 1 à 10, caractérisé en ce que l'on produit la pièce de remplissage (7, 7', 7'', chaperon 15) en acier non allié.

12. Procédé selon une des revendications 1 à 10, caractérisé en ce que l'on réalise la pièce de remplissage (7, 7', 7'') sous la forme d'une plaquette plane.

13. Procédé selon une des revendications 1 à 10, caractérisé en ce que l'on réalise la pièce de remplissage comme un petit chapeau ou chaperon (15) de forme tronconique, que l'on met en place dans le perçage (6, 23') avec le côté fermé (16) dirigé vers l'extérieur.

14. Procédé selon une des revendications 1 à 13, caractérisé en ce que l'on enfonce la pièce de remplissage (17) par pression dans le perçage (6) jusqu'à une profondeur définie, la pièce étant maintenue en place dans le perçage par ajustage serré.

15. Procédé selon une des revendications 1 à 13, caractérisé en ce que l'on forme dans le perçage (6) un épaulement (13, 14, 14') sur lequel la pièce de remplissage (7, 7', 15) introduite est maintenue en place par coopération de formes et qui définit la profondeur de pénétration de la pièce de remplissage.
